## Europäisches Patentamt

## European Patent Office

## Office européen des brevets

(19)

(11) Veröffentlichungsnummer: **0 503 030 B1**

(12) ## EUROPÄISCHE PATENTSCHRIFT

(45) Veröffentlichungstag der Patentschrift: **06.12.95**

(51) Int. Cl.⁶: **B60T 8/00**

(21) Anmeldenummer: **91916870.8**

(22) Anmeldetag: **26.09.91**

(86) Internationale Anmeldenummer:
**PCT/EP91/01837**

(87) Internationale Veröffentlichungsnummer:
**WO 92/05984 (16.04.92 92/09)**

(54) **VERFAHREN ZUR VERBESSERUNG DER BEHERRSCHBARKEIT VON KRAFTFAHRZEUGEN BEIM BREMSEN.**

(30) Priorität: **28.09.90 DE 4030704**

(43) Veröffentlichungstag der Anmeldung:
**16.09.92 Patentblatt 92/38**

(45) Bekanntmachung des Hinweises auf die Patenterteilung:
**06.12.95 Patentblatt 95/49**

(84) Benannte Vertragsstaaten:
**AT DE FR GB IT SE**

(56) Entgegenhaltungen:
**EP-A- 0 152 602       EP-A- 0 219 023**
**EP-A- 0 323 066       EP-A- 0 325 298**
**EP-A- 0 392 165       WO-A-90/06251**
**WO-A-91/04892**

(73) Patentinhaber: **ROBERT BOSCH GMBH**
**Postfach 30 02 20**
**D-70442 Stuttgart (DE)**

(72) Erfinder: **EHRET, Thomas**
**Hindenburgstr. 33**

**D-7633 Seelbach (DE)**
Erfinder: **KOST, Friedrich**
**Johannes-Brahms-Str. 1**
**D-7014 Kornwestheim (DE)**
Erfinder: **HARTMANN, Uwe**
**Olgastr. 79**
**D-7000 Stuttgart 1 (DE)**
Erfinder: **ERHARDT, Rainer**
**Am Wallgraben 18**
**D-7000 Stuttgart 80 (DE)**
Erfinder: **VAN ZANTEN, Anton**
**Waldstrasse 15/2**
**D-7257 Ditzingen 4 (DE)**
Erfinder: **BUSCH, Gerd**
**Karlsbaderstrasse 53**
**D-7016 Gerlingen (DE)**
Erfinder: **WEISS, Karl-Josef**
**Hausgärten 33**
**D-7050 Waiblingen (DE)**
Erfinder: **RUF, Wolf-Dieter**
**Schlatthölzlesweg 17**
**D-7076 Waldstetten (DE)**

EP 0 503 030 B1

**Beschreibung**

Stand der Technik

Bei herkömmlichen ABS/ASR-Systemen steht die Längsdynamik des Fahrzeugs im Vordergrund. Stabilität und Beherrschbarkeit des Fahrzeugs werden nicht direkt geregelt, sondern ergeben sich aus invarianten Kompromissen bei der Auslegung des ABS/ASR-Reglers, die nicht in allen Fahrsituationen optimal bezüglich Querdynamik und Bremsweg/Beschleunigung sein können.

Aus der DE-OS 38 40 456 ist es bekannt, die Beherrschbarkeit eines Fahrzeugs dadurch zu erhöhen, daß die an den Achsen vorhandenen Schräglaufwinkel ermittelt werden und daß hieraus Sollschlupfwerte abgeleitet werden, deren Einhalten die Beherrschbarkeit des Fahrzeugs erhöhen.

Vorteile der Erfindung

Gegenüber diesen Stand der Technik wird bei der Erfindung hier ein modellgestützter Reglerentwurf vorgenommen. Das hat den Vorteil, daß die Reglerverstärkungen entsprechend der Fahrsituation und den Fahrbahnverhältnissen ständig neu berechnet werden. Das hier verwendete Zweispurmodell und das Reifenmodell liefern wesentlich bessere Ergebnisse als die sonst oft verwendeten Einspurmodelle. Der Reglerentwurf wird auf der Basis eines Kalman-Filter-Entwurfs durchgeführt und ist damit sehr rechenzeiteffektiv.

Außerdem erfolgen die Eingriffe hier gegebenenfalls an allen vier Rädern und die Verteilung auf die Räder erfolgt unter Kraftoptimierungs-Gesichtspunkten. Der Eingriff selbst erfolgt durch Drehung der Kraftrichtungen an den einzelnen Rädern infolge der Schlupfänderungen. Neu ist auch der Einsatz einer Mehrgrößen-Zustandsregelung. Die Zustandsgrößen Schwimmwinkel und Giergeschwindigkeit können innerhalb der physikalischen Grenzen unabhängig voneinander geregelt werden.

Durch die übergeordnete Fahrdynamikregelung gemäß der Erfindung werden Verbesserungen der Fahrstabilität und der Fahrzeugbeherrschbarkeit bei gleichzeitiger Optimierung der Antriebs-/Bremskraft erzielt.

Dazu wird zunächst ein einfaches, ebenes Modell eines vierrädrigen Straßenfahrzeugs hergeleitet, anhand dessen dann eine Regelung für das Fahrverhalten in allen Fahrzuständen entworfen wird.

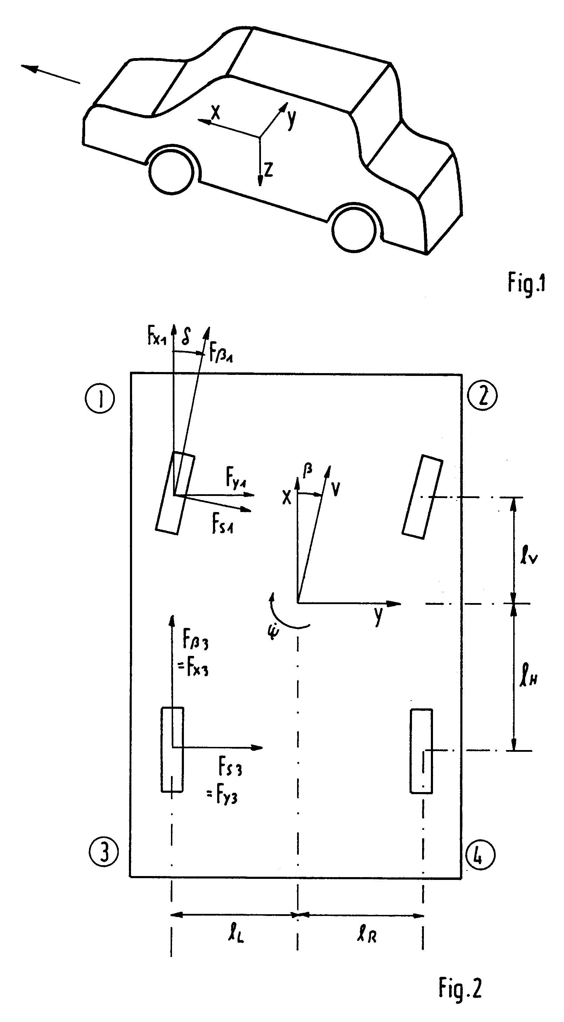

Das Modell ist von zweiter Ordnung mit den Zustandsgrößen Giergeschwindigkeit $\dot{\psi}$ und Schwimmwinkel $\beta$ (s. Fig. 1 und Fig. 2 und Abkürzungsverzeichnis am Beschreibungsende).

Für den Schwimmwinkel gilt:

$$\beta = \arctan\frac{V_Y}{V_X}$$

$$\beta \approx \frac{V_Y}{V_X}$$

($V_X$ Längsgeschwindigkeit, $V_Y$ Quergeschwindigkeit)
Damit gilt für die zeitliche Änderung:

$$\dot{\beta} = \frac{d}{dt}\left(\frac{V_Y}{V_X}\right) = \frac{\dot{V}_Y V_X - V_Y \dot{V}_X}{V_X^2}$$

Für Relativbewegungen gilt:
$\dot{V}_Y = a_Y - \dot{\psi} \cdot V_X$ , wobei $a_Y$ die Querbeschleunigung ist.

Damit lautet die Differentialgleichung für den Schwimmwinkel:

$$\dot\beta = -\beta\frac{\dot V_X}{V_X} - \dot\psi + \frac{a_Y}{V_X} \qquad\qquad (1)$$

Die Querbeschleunigung $a_Y$ läßt sich aus der Summe der an den Reifen quer auf das Fahrzeug wirkenden Kräfte $F_Y$ ermitteln (s. Fig. 2).

$$a_Y = \frac{1}{m}\sum_{i=1}^{4} F_{Yi}$$

mit $m$ = Fahrzeugmasse.

An den Vorderrädern müssen zur Ermittlung der Querkräfte bei einem Lenkwinkel $\delta$ ungleich Null die Längs- ($F_B$) und die Seitenkräfte ($F_S$) an den Reifen berücksichtigt werden.

$$a_Y = \frac{1}{m}\Big[(F_{S1} + F_{S2})\cos\delta + (F_{B1} + F_{B2})\sin\delta + F_{S3} + F_{S4}\Big]$$

$$a_Y = \frac{1}{m}\sum_{i=1}^{4}(g_i F_{Si} + h_i F_{Bi}) \qquad\qquad (2)$$

mit

$$\underline{g} = \begin{bmatrix} \cos\delta \\ \cos\delta \\ 1 \\ 1 \end{bmatrix}; \qquad \underline{h} = \begin{bmatrix} \sin\delta \\ \sin\delta \\ 0 \\ 0 \end{bmatrix} \qquad\qquad (3)$$

Die Differentialgleichung für die Giergeschwindigkeit ergibt sich aus den um den Fahrzeugschwerpunkt wirkenden Momenten aus Reifenkräften und den entsprechenden Hebelarmen (s. Fig. 2):

$$\ddot\psi = \frac{1}{\theta}\Big[l_L F_{X1} + l_v F_{Y1} - l_R F_{X2} + l_v F_{Y2} + l_L F_{X3} - l_H F_{Y3} - l_R F_{X4} - l_H F_{Y4}\Big]$$

mit

$$F_{X1} = \cos\delta \cdot F_{B1} - \sin\delta \cdot F_{S1}$$
$$F_{X3} = F_{B3}$$
$$F_{Y1} = \cos\delta \cdot F_{S1} + \sin\delta \cdot F_{B1}$$

usw.

Damit gilt:

$$\ddot{\psi} = \frac{1}{\theta} \sum_{i=1}^{4} (a_i F_{Si} + b_i F_{Bi}) \tag{4}$$

mit

$$\underline{a} = \begin{bmatrix} l_V \cdot \cos\delta - l_L \cdot \sin\delta \\ l_V \cdot \cos\delta + l_R \cdot \sin\delta \\ -l_H \\ -l_H \end{bmatrix} \tag{5}$$

$$\underline{b} = \begin{bmatrix} l_L \cdot \cos\delta + l_V \cdot \sin\delta \\ -l_R \cdot \cos\delta + l_V \cdot \sin\delta \\ l_L \\ -l_R \end{bmatrix}$$

Die Reifenkräfte erhält man bei bekanntem Reifenschlupf und Schräglaufwinkel näherungsweise aus folgender Beziehung:

$$\begin{bmatrix} F_{Si} \\ F_{Bi} \end{bmatrix} = \begin{bmatrix} c\alpha_i \\ \lambda_i \end{bmatrix} \cdot \frac{\mu_{Ri}(S_i)}{S_i} \cdot F_{Zi}$$

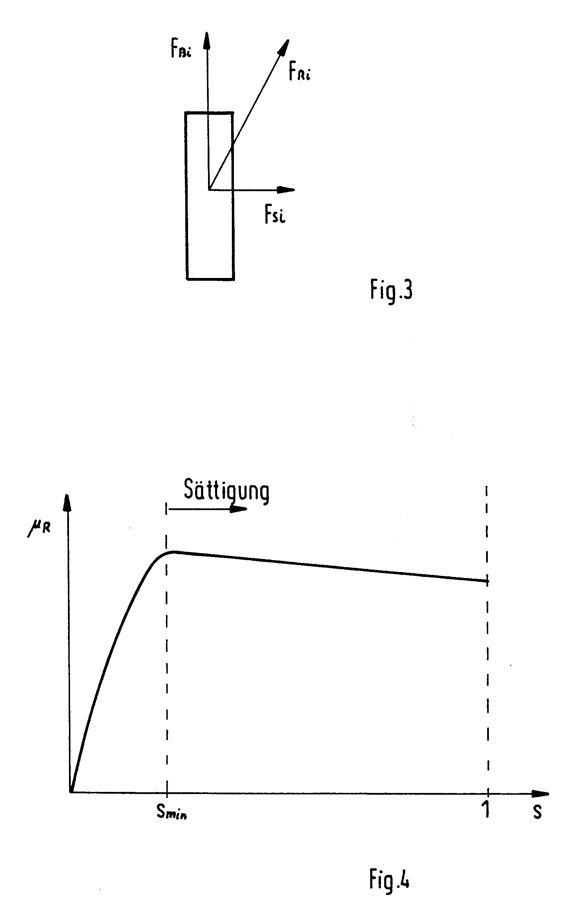

mit (s. Fig. 3)

$$c = \frac{c_\alpha}{c_\lambda}$$

$$S_i = \sqrt{\lambda_i^2 + c^2 \alpha_i^2} \tag{6}$$

$$F_{Ri} = \mu_{Ri} \cdot F_{Zi}$$

Es folgt:

$$\begin{bmatrix} F_{Si} \\ F_{Bi} \end{bmatrix} = \begin{bmatrix} c \cdot \alpha_i \\ \lambda_i \end{bmatrix} \cdot \frac{F_{Ri}}{\sqrt{\lambda_i^2 + c^2 \alpha_i^2}} \tag{7}$$

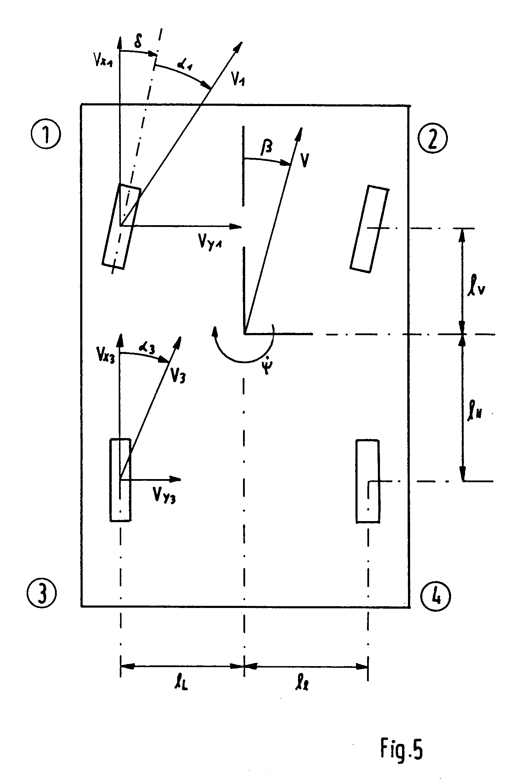

Zwischen dem resultierenden Reifenschlupf $S_i$ und dem resultierenden Kraftschlußbeiwert $\mu_{Ri}$ gibt es einen ähnlichen nichtlinearen Zusammenhang wie zwischen dem bekannten Reifenschlupf $\lambda$ und dem Kraftschluß-beiwert $\mu$ in Reifenlängsrichtung. Im folgenden wird davon ausgegangen, daß der Reifen während der ABS-Regelung im allg. den Bereich der Sättigung nicht verläßt, d.h. daß $S$ größer ist als $S_{min}$ (s. Fig. 4). Das kann durch genügend großen Schlupf und/oder durch genügend großen Schräglaufwinkel an den Rädern erreicht werden. Damit wird sichergestellt, daß die zwischen Fahrbahn und Reifen maximal übertragbare Gesamtkraft (aufgeteilt in Längs- und Querkraft) weitgehend ausgenutzt wird.

Die Größe der Gesamtkraft $F_R$ eines jeden Reifens bleibt im Bereich $S > S_{min}$ annähernd konstant. Durch eine Änderung des Reifenschlupfs bzw. (indirekt über eine Drehung des Fahrzeugs) des Schräglaufwinkels kann jedoch die Richtung der resultierenden Gesamtkraft geändert werden. Auf dieser Änderung der Kraftrichtungen und daraus resultierend der auf das Fahrzeug wirkenden Längs- und Querkräfte und Giermomente beruht die Wirkung des hier beschriebenen Fahrzeugreglers.

Die Schräglaufwinkel $\alpha_i$ an den Reifen lassen sich wie folgt als Funktion der Zustandsgrößen Schwimm-winkel $\beta$ und die Giergeschwindigkeit $\dot{\psi}$ und des Lenkwinkels $\delta$ angeben (s. Fig. 5).

Z.B. gilt vorne links:

$$\alpha_1 = \arctan \frac{V_{Y1}}{V_{X1}} - \delta \approx \frac{V_{Y1}}{V_{X1}} - \delta$$

$$\alpha_1 = \frac{V_Y + \dot{\psi} l_v}{V_X + \dot{\psi} l_L} - \delta$$

Da $\dot{\psi} \bullet l_L$ klein ist gegenüber $V_X$ kann vereinfacht werden zu:

$$\alpha_1 = \beta + \frac{l_v}{V_X} \cdot \dot{\psi} - \delta$$

mit

$$\beta \approx \frac{V_Y}{V_X}$$

Ebenso kann vorne rechts und hinten verfahren werden.

Damit gilt für die Schräglaufwinkel:

$$\underline{\alpha} = \underline{1} \bullet \beta + \underline{e} \bullet \dot{\psi} + \underline{d} \bullet \delta \qquad (8)$$

mit

$$\underline{e} = \begin{bmatrix} \dfrac{l_V}{V_X} \\[2mm] \dfrac{l_V}{V_X} \\[2mm] -\dfrac{l_H}{V_X} \\[2mm] -\dfrac{l_H}{V_X} \end{bmatrix} \quad ; \qquad \underline{d} = \begin{bmatrix} -1 \\ -1 \\ 0 \\ 0 \end{bmatrix} \qquad\qquad (9)$$

Aus (1), (2) und (3) und mit (4), (5), (7) und (8) ergeben sich damit folgende Systemgleichungen:

$$\dot{\beta} = -\beta \frac{\dot{V}_X}{V_X} - \dot{\psi} + \frac{1}{m \cdot V_X} \sum_{i=1}^{4} \left[ (g_i c\alpha_i + h_i \cdot \lambda_i) \right] \cdot \frac{F_{Ri}}{\sqrt{\lambda_i^2 + c^2 \alpha_i^2}} \qquad (10)$$

$$\ddot{\psi} = \frac{1}{\theta} \sum_{i=1}^{4} \left[ (a_i c\alpha_i + b_i \lambda_i) \right] \cdot \frac{F_{Ri}}{\sqrt{\lambda_i^2 + c^2 \alpha_i^2}} \qquad\qquad (11)$$

mit (9)

$$\alpha_i = \beta + e_i \dot{\psi} + d_i \delta$$

Die Giergeschwindigkeit kann mit geeigneten Sensoren, z.B. Faserkreisel, direkt gemessen werden.

Der Lenkwinkel kann ebenfalls mit bereits bekannten Einrichtungen gemessen werden.

Der Schwimmwinkel und die Reifenkräfte können in Verbindung mit einem geeigneten Radschlupf-Regler durch einen Schätzalgorithmus (Beobachter) annähernd bestimmt werden. Ein solcher Beobachter ist in der Patentanmeldung P 40 30 653.4 beschrieben.

Fahrzeuglängsgeschwindigkeit und -beschleunigung sind durch die bei ABS/ASR-Einrichtungen vorhandenen Raddrehzahlsensoren und eine entsprechende Auswertung näherungsweise bekannt, ebenso die augenblicklichen Radschlupfwerte an den einzelnen Rädern (Patentanmeldung P 40 24 815.1). Die Schlupfwerte bilden hier die Stellgröße des Reglers, da sie über den Bremsdruck beeinflußt werden können.

Die Parameter Lenkwinkel, Fahrzeuggeschwindigkeit und -beschleunigung und resultierende Reifenkräfte werden als langsam veränderlich und damit quasistationär angenommen.

Für die Fahrzeugparameter Masse, Trägheitsmoment, Schwerpunktslage und Reifensteifigkeiten können geschätzte Werte angenommen werden.

Damit ist das Fahrzeugmodell zweiter Ordnung vollständig bekannt und kann als Grundlage für einen Reglerentwurf verwendet werden.

Dazu wird das System zunächst um zeitlich veränderliche Arbeitspunkte linearisiert. Als Arbeitspunkte werden physikalisch realisierbare Werte für den Schwimmwinkel $\beta$ und die Giergeschwindigkeit $\dot{\psi}$, z.B. die augenblicklich gewünschten Sollwerte, gewählt.

Nichtlineares System:

$$\dot{\underline{Y}} = f(\underline{Y}, \underline{\lambda}, t)$$

mit

$$\underline{Y} = \begin{bmatrix} \beta \\ \dot{\psi} \end{bmatrix} \quad ; \qquad \underline{\lambda} = \begin{bmatrix} \lambda_1 \\ \lambda_2 \\ \lambda_3 \\ \lambda_4 \end{bmatrix}$$

Linearisierung:

Arbeitspunkte der Zustandsgrößen $\underline{Y}$ (z.B. Solltrajektorie): $\underline{Y}_0(t)$

Arbeitspunkte der Stellgrößen $\underline{\lambda}$ (z.B. Arbeitspunkt eines unterlagerten Radschlupfreglers, ohne Fahrzeugreglereingriff): $\underline{\lambda}_0(t)$

$$\underline{Y} = \underline{Y}_0 + \underline{X}$$

$$\underline{\lambda} = \underline{\lambda}_0 + \underline{\Delta\lambda}$$

$$\underline{\dot{X}} = \underline{f}\left(\underline{Y}_0 + \underline{X}, \underline{\lambda}_0 + \underline{\Delta\lambda}, t\right) - \underline{\dot{Y}}_0$$

$$\underline{\dot{X}} = \underline{f}\left(\underline{Y}_0, \underline{\lambda}_0, t\right) + \left.\frac{\partial \underline{f}}{\partial \underline{Y}}\right|_0 \cdot \underline{X} + \left.\frac{\partial \underline{f}}{\partial \underline{\lambda}}\right|_0 \underline{\Delta\lambda} + \underline{r}(\underline{X}, \underline{\Delta\lambda}, t) - \underline{\dot{Y}}_0$$

$$\underline{\dot{X}} = A\underline{X} + \left.\frac{\partial \underline{f}}{\partial \underline{\lambda}}\right|_0 \cdot \underline{\Delta\lambda} + \underline{r} + \underbrace{\left[\underline{f}\left(\underline{Y}_0, \underline{\lambda}_0, t\right) - \underline{\dot{Y}}_0\right]}_{\underline{Z}}$$

Der Linearisierungsfehler $\underline{r}$ wird vernachlässigt.

Für den Reglerentwurf werden zunächst zwei Pseudo-Eingangsgrößen $U1'$ und $U2'$ gebildet.

$$U1' = \sum_{i=1}^{4} \left.\frac{\partial f_1}{\partial \lambda_i}\right|_0 \cdot \Delta\lambda_i \qquad\qquad (12)$$

$$U2' = \sum_{i=1}^{4} \left.\frac{\partial f_2}{\partial \lambda_i}\right|_0 \cdot \Delta\lambda_i$$

Die Systemgleichung des linearisierten Systems lautet damit:

$$\underline{\dot{X}} = A\underline{X} + B\underline{U}' + \underline{Z} \qquad\qquad (13)$$

mit

$$A = \left.\frac{\partial \underline{f}}{\partial \underline{Y}}\right|_0 \quad ; \qquad\qquad B = \begin{bmatrix} 1 & 0 \\ 0 & 1 \end{bmatrix}$$

Der Term $Z$ wird wie eine Störgröße behandelt, die über die Stellgröße kompensiert werden kann.

7

Für den Reglerentwurf werden die Stellgrößen $\underline{U}'$ aufgeteilt in die Zustandsgrößenrückführung $\underline{U}$ und in die Störgrößenaufschaltung $U_Z$.

$$\underline{U}' = \underline{U} + \underline{U_Z} \qquad (14)$$

Für die Störgrößenaufschaltung gilt:

$$\underline{U_Z} = -B^{-1} \cdot \underline{Z} = -\underline{Z}$$

Der Reglerentwurf wird durchgeführt für:

$$\underline{\dot{X}} = A \cdot \underline{X} + B \cdot \underline{U} \qquad (15)$$

Wenn um die Sollwerte linearisiert wird, dann entfällt eine Führungsgrößenaufschaltung. Das Regelgesetz lautet dann:

$$\underline{U} = -F \cdot \underline{X}$$

Die Zustandsgrößenrückführmatrix $F$ kann z.B. mit dem bekannten Riccati-Entwurf berechnet werden.

Zur Lösung der nichtlinearen Matrix-Riccati-Gleichung stehen dabei bekannte iterative und nichtiterative Verfahren zur Verfügung. Bei den iterativen Verfahren sind die numerischen Schwierigkeiten insbesondere im Hinblick auf einen Echtzeitentwurf nicht zu unterschätzen, nichtiterative Verfahren scheiden von vornherein aufgrund des hohen numerischen Aufwands zur Bestimmung der Eigenwerte und Eigenvektoren des Hamiltonschen kanonischen Systems aus. Es wurde deshalb ein Verfahren zur Bestimmung optimaler Zustandsrückführungen entwickelt, das die oben genannten Schwierigkeiten umgeht. Ausgangspunkt ist das oben aufgeführte System (15).

$$\underline{\dot{X}} = A\underline{X} + \underline{U}$$

Eine Euler-Diskretisierung ergibt:

$$\underline{X}_{K+1} = \Phi_K \cdot \underline{X}_K + \underline{\hat{U}}_K$$

mit

$$\Phi_K = T \cdot A + I; \ \underline{\hat{U}}_K = T \cdot \underline{U}$$

mit $T$: Abtastzeit
Die Zustandsrückführung wird zu

$$\underline{\hat{U}}_K = -F_K \cdot \underline{X}_K$$

gewählt.
Damit gilt:

$$\underline{X}_{K+1} = (\Phi_K - F_K)\underline{X}_K \qquad (16)$$

Die Rückführmatrix $F_K$ soll nun so bestimmt werden, daß gilt:

$$E\left\{\underline{X}_K^T \cdot G \cdot \underline{X}_K\right\} \xrightarrow{F_K} \min. \qquad (17)$$

mit $G$: Gewichtungsmatrix, diagonal positiv definit.
Wählt man

$$G = M \cdot M$$

mit

$$M = \begin{bmatrix} \sqrt{g_1} & 0 \\ 0 & \sqrt{g_2} \end{bmatrix}$$

so folgt aus (17):

$$E\left\{\underline{X}_K^T \cdot G \cdot \underline{X}_K\right\} = E\left\{(M \cdot \underline{X}_K)^T \cdot (\boldsymbol{M} \cdot \underline{X}_K)\right\} \xrightarrow{F_K} \min. \tag{18}$$

Führt man den neuen Zustandsvektor

$$\underline{Z}_K = M \bullet \underline{X}_K$$

ein so folgt aus (16):

$$\underline{Z}_{K+1} = \left(\Phi_K^* - F_K^*\right) \cdot \underline{Z}_K$$

und aus (18):

$$E\left\{\underline{Z}_K^T \cdot \underline{Z}_K\right\} \xrightarrow{F_K^*} \min. \tag{19}$$

mit

$$\Phi_K^* = M \cdot \Phi_K \cdot M^{-1} \quad ; \qquad F_K^* = M \cdot F_K \cdot M^{-1}$$

Vergleicht man (19) mit der Schätzfehlergleichung eines Beobachters und dem dazughörigen Gütekriterium

$$\underline{\varepsilon}_{K+1} = \left(A_K - K_K \cdot C\right)\underline{\varepsilon}_K \tag{20}$$

$$E\left\{\underline{\varepsilon}_K^T \cdot \underline{\varepsilon}_K\right\} \xrightarrow{K_K} \min.$$

so sind bei Wahl von $C = 1$ (19) und (20) formal gleichwertig. Das bedeutet, daß zur Berechnung von $F_K^*$ Algorithmen zur Berechnung optimaler Zustandsbeobachter eingesetzt werden können. Dabei bietet sich das Kalman-Filter aufgrund seiner rekursiven Struktur besonders an.

Die Gleichungen zur Berechnung von $F_K^*$ lauten:

$$F_K^* = P_K^* \cdot \left( P_K^* + R_K \right)^{-1}$$

$$\hat{P}_K = P_K^* - F_K^* \cdot P_K^*$$

$$P_{K+1}^* = \Phi_K^* \cdot \hat{P}_K \cdot \Phi_K^{*^T} + Q_K$$

mit

$$R_K = \begin{bmatrix} r_1 & 0 \\ 0 & r_2 \end{bmatrix} \quad ; \quad Q_K = \begin{bmatrix} q_1 & 0 \\ 0 & q_2 \end{bmatrix}$$

Die Eingangsgröße in Gleichung (15) ergibt sich damit zu:

$$\underline{U} = -\frac{M^{-1} \cdot F_K^* M}{T} \cdot \underline{X} = -F \cdot \underline{X}$$

Bei der Umrechnung der zwei Pseudo-Eingangsgrößen $\underline{U}$ (14) in die vier Stellgrößen $\underline{\Delta\lambda}$ stehen zwei Freiheitsgrade zur Verfügung. Diese können dazu verwendet werden, die Längsverzögerung und damit die Bremskraft in Fahrzeuglängsrichtung zu maximieren, um bei vorgegebenem Fahrzeugverhalten (bezüglich Seiten- und Gierbewegung) einen möglichst kurzen Bremsweg zu erzielen.

Die Gleichung für die Längsbeschleunigung lautet (s. Fig. 2).

$$a_X = \frac{1}{m} \sum_{i=1}^{4} F_{Xi}$$

$$= \frac{1}{m} \left[ \left( F_{B1} + F_{B2} \right) \cos\delta - \left( F_{S1} + F_{S2} \right) \sin\delta + F_{B3} + F_{B4} \right]$$

oder mit (3), (7) und (8):

$$a_X = \frac{1}{m} \sum_{i=1}^{4} \left[ \left( g_i \lambda_i - h_i c \alpha_i \right) \frac{F_{Ri}}{\sqrt{\lambda_i^2 + c^2 \alpha_i^2}} \right]$$

mit

$$\lambda_i = \lambda_{0i} + \Delta\lambda_i$$

Für die maximale Längsverzögerung gilt:

$$a_X \overset{!}{=} \min$$

Als Nebenbedingungen der Minimierungsaufgabe müssen die Gleichungen (12) erfüllt werden:

$$\sum_{i=1}^{4} \frac{\partial f_1}{\partial \lambda_i}\bigg|_0 \cdot \Delta\lambda_i - U_1' = 0$$

$$\sum_{i=1}^{4} \frac{\partial f_2}{\partial \lambda_i}\bigg|_0 \cdot \Delta\lambda_i - U_2' = 0$$

Außerdem müssen Beschränkungen der Variablen $\lambda_i$ beachtet werden, da der Radbremsschlupf nur Werte zwischen Null und Eins annehmen kann.

$$\Delta\lambda_{min_i} \leq \Delta\lambda_i \leq \Delta\lambda_{max} .$$

Die Sollwerte für den Schwimmwinkel $\beta$ und für die Giergeschwindigkeit $\dot{\psi}$ können entsprechend dem gewünschten Fahrverhalten festgelegt werden. Der vom Fahrer durch den Lenkwinkel vorgegebene Wunsch zur Richtungsänderung muß dabei unter Berücksichtigung der Fahrzeuggeschwindigkeit und der Fahrbahnverhältnisse in entsprechende Sollwerte umgerechnet werden.

Beispiel:

Sollwert für $\dot{\psi}$:

$$\dot{\psi}_{Soll} = \frac{V_X}{(l_V + l_H) \cdot \left(1 + \frac{V_X^2}{V_{Ch}^2}\right)} \cdot \delta$$

$V_{Ch}$ ist dabei eine Konstante, die das Fahrverhalten bei höheren Geschwindigkeiten beeinflußt. Dieser Rohwert muß bei großem Lenkwinkel, hoher Fahrzeuggeschwindigkeit oder niedrigem Haftreibbeiwert der Fahrbahn auf einen sinnvollen Wert begrenzt werden, da sonst die Giergeschwindigkeit größer wird als die maximal mögliche Winkeländerungsgeschwindigkeit der Bahnkurve. Dann nimmt der Schwimmwinkel zu und das Fahrzeug schleudert.

Um das zu vermeiden wird z.B. festgelegt, welchen Anteil der maximal verfügbaren Gesamtkraft die Querkraft in Anspruch nehmen darf.

$$F_{Y\,max} = f_Y \cdot F_{max}$$

$$= f_Y \sum_{i=1}^{4} |F_{Ri}|$$

mit

$$0 < f_Y < 1$$

11

Daraus läßt sich dann eine maximale Giergeschwindigkeit für stationäre Kurvenfahrt berechnen.

$$\dot{\psi}_{max} = \frac{a_{Y\,max}}{V_X} = \frac{F_{Y\,max}}{m \cdot V_X}$$

$$\dot{\psi}_{max} = \frac{f_Y \sum_{i=1}^{4} |F_{Ri}|}{m \cdot V_X}$$

$$|\dot{\psi}_{soll}| \overset{!}{\leq} \dot{\psi}_{max}$$

Für den Schwimmwinkel können neben echten Sollwerten auch Begrenzungen vorgegeben werden, die verhindern, daß der Schwimmwinkel zu groß wird. Eine Regelabweichung der ersten Zustandsgröße ergibt sich in diesem Fall nur, wenn der Betrag des Schwimmwinkels seine Begrenzung überschreitet. Die Begrenzung kann z.B. so festgelegt werden, daß bei Bremsschlupf Null der resultierende Schlupf $S$ an den Hinterrädern die Sättigungsgrenze $S_{min}$ nicht wesentlich überschreitet (s. Fig. 4, (6)).

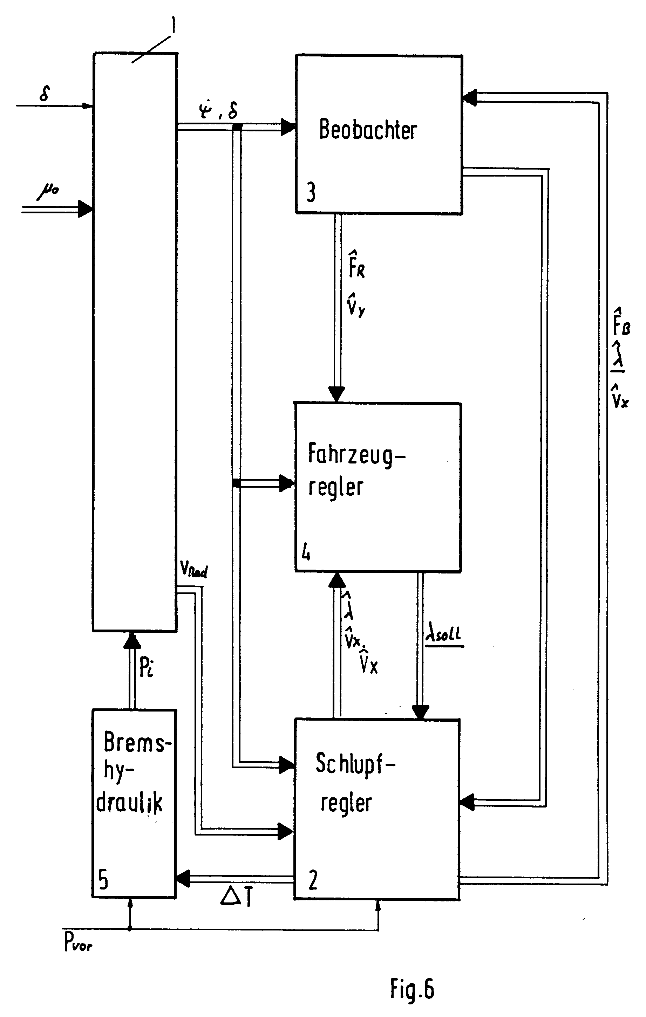

Der oben beschriebene Fahrzeugregler kann mit einem Algorithmus zur Schätzung der Fahrzeugouergeschwindigkeit und der Reifenkräfte (P 40 30 653.4, Anlage I) und mit einem anderen Algorithmus zur Einstellung der vom Fahrzeugregler vorgegebenen Sollschlupfwerte an den einzelnen Rädern (z.B. Patentanmeldung P 40 30 724.7 Anlage III, und P 40 24 815.1, Anlage II) kombiniert werden. Fig. 6 zeigt eine Übersicht des Gesamtsystems bei ABS.

Auf das Fahrzeug 1 wirkt von außen der Lenkwinkel $\delta$ und der Kraftschlußbeiwert $\mu_0$ ein. Am Fahrzeug 1 werden die Radgeschwindigkeiten $V_{Ri}$, der Lenkwinkel $\delta$ und die Giergeschwindigkeit $\dot{\psi}$ gemessen, außerdem eventuell der Vordruck $P$ der Bremsanlage oder die einzelnen Radbremszylinderdrücke $P_i$. Bei ASR-Reglern werden außerdem z.B. die Motordrehzahl und der Drosselklappenwinkel gemessen. Ein Schlupfregler 2 schätzt daraus unter Zuhilfenahme der von einem Beobachter 3 gelieferten Größen die Bremskräfte $\widehat{F}_B$ und die Fahrzeuglängsgeschwindigkeit $\widehat{V}_X$ und -beschleunigung $\widehat{\dot{V}}_X$. Damit sind auch die Radschlupfwerte der einzelnen Räder bekannt. Mit diesen Informationen kann der Beobachter 3 die Fahrzeugquergeschwindigkeit $\widehat{V}_Y$ und die Seitenkräfte $\widehat{F}_s$ an den Reifen und damit auch die resultierenden Reifenkräfte $\widehat{F}_R$ abschätzen. Damit sind alle Größen bekannt, die ein Fahrzeugregler 4 nach der oben beschriebenen Methode zur Bestimmung der Sollschlupfwerte $\lambda_{soll}$ benötigt. Die Sollschlupfwerte werden dann an den Schlupfregler 2 weitergegeben, der sie durch Änderung der Radbremsdrücke $P_i$ mittels der Bremshydraulik 5 einstellt. Bei ASR-Reglern kann außerdem das Motormoment durch den Regler verändert werden.

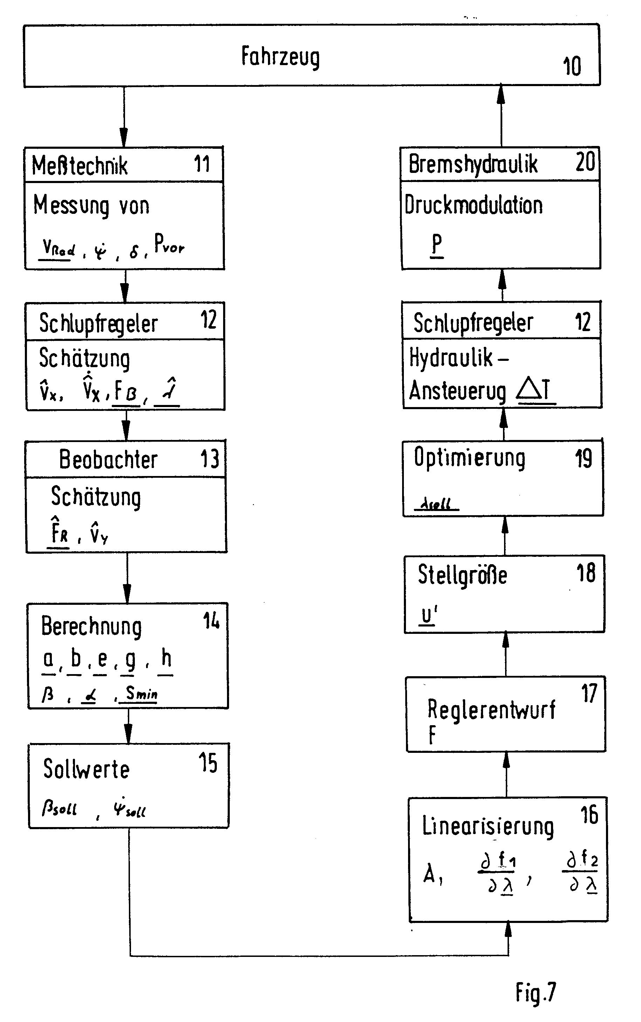

Fig. 7 zeigt als Beispiel einen groben Ablaufplan des Verfahrens.

Dieses Verfahren kann in eine Programmiersprache umgesetzt und auf einem geeigneten Digitalrechner (Mikroprozessor) implementiert werden. Es bietet gegenüber herkömmlichen ABS/ASR-Systemen eine erhöhte Fahrzeugstabilität (sicheres Verhindern von Schleudervorgängen), eine verbesserte Lenkbarkeit mit durch die Sollwerte vorgebbarem Lenkverhalten und bei Lenkmanövern eine bessere Ausnutzung des Kraftschlußpotentials der Fahrbahn und damit einen kürzeren Bremsweg bzw. eine bessere Fahrzeugbeschleunigung. Die bei herkömmlichen Systemen notwendigen Kompromisse zur Beherrschung aller vorkommenden Fahr- und Straßensituationen entfallen weitgehend.

Das hier beschriebene Regelungskonzept kann in allen Fahrsituationen eingesetzt werden, nicht nur bei ABS/ASR-Betieb.

Block 10 stellt das Fahrzeug dar. An ihm werden mit einem Block 11 Meßtechnik die Radgeschwindigkeiten $V_{Ri}$, die Giergeschwindigkeit $\dot{\psi}$ der Lenkwinkel $\delta$ und der Vordruck $P$ oder die Radbremsdrücke $P_i$ gemessen. In einem schlupfregler 12 werden hieraus die Größen Längsgeschwindigkeit $\widehat{V}_X$, Längsbeschleunigung $\widehat{\dot{V}}_X$, Bremskräfte $\widehat{F}_{Bi}$ und Schlupfwerte $\lambda_i$ abgeschätzt (z.B. gemäß Anlage I). Ein Beobachter 13 schätzt hieraus die Reifenkräfte $\widehat{F}_R$ und die Quergeschwindigkeit $\widehat{V}_Y$. Hieraus können in einem Block 14 die Werte für den Schwimmwinkel $\beta$, die Schräglaufwinkel $\alpha_i$ und den Minimalschlupf $S_{min}$ ermittelt werden. Hieraus ergeben sich dann in einem Block 15 die Sollwerte $\beta_{soll}$ und $\dot{\psi}_{soll}$.

In Block 16 werden die nun bekannten Meß- und Schätzwerte, die Fahrzeugparameter (z.B. Fahrzeugmasse $m$) und die hier als Arbeitspunkte $\underline{Y}_0$ verwendeten Sollwerte $\beta_{soll}$ und $\dot{\psi}_{soll}$ in die bereits im voraus berechneten Linearisierungsgleichungen des Fahrzeugmodells eingesetzt. Man erhält damit die Systemmatrix $A$ und die Verstärkungsfaktoren

$$\frac{\partial f_1}{\partial \lambda_i}$$

und

$$\frac{\partial f_2}{\partial \lambda_i},$$

welche den Einfluß von Schlupfänderungen auf das Systemverhalten beschreiben.

Im Block 17 kann für das nunmehr bekannte, linearisierte System (s. Gleichung (15)) wie beschrieben ein Reglerentwurf durchgeführt werden und man erhält die Zustandsgrößenrückführmatrix $F$.

In Block 18 wird aus der Regelabweichung $\underline{X}$, der Rückführmatrix $F$ und der Störgrößenaufschaltung $\underline{U}_Z$ die Pseudo-Stellgröße $\underline{U}'$ berechnet (s. Gleichung (14)). Nach der beschriebenen Methode der Längskraftoptimierung werden nun die Schlupfwerte $\lambda_{soll}$ so berechnet, daß die gewünschten Stellgrößen $\underline{U}$ realisiert werden (s. Gleichung 12)).

Die Schlupfsollwerte werden wieder dem Schlupfregler 12 zugeführt, der sie über die Bremshydraulik 20 in Bremsdrücke $P_i$ umsetzt.

Das bisher beschriebene Fahrzeugregelungskonzept kann bei Bedarf verändert beziehungsweise erweitert werden.

Bei entsprechender Ausrüstung des Fahrzeugs kann mit dem beschriebenen Regelkonzept zusätzlich zu den Radschlupfwerten auch der Lenkwinkel an den Hinterrädern geregelt werden. Dazu muß eine zusätzliche Größe $\delta_H$ für den Hinterradlenkwinkel eingeführt werden.

Nach einer Linearisierung von $\delta_H$ um $\delta_H = 0$ lautet die Gleichung für die Querbeschleunigung (2):

$$a_Y = \frac{1}{m} \sum_{i=1}^{4} \left[ g_i F_{Si} + \left( h_i + h_{Hi} \cdot \delta_H \right) \cdot F_{Bi} \right]$$

mit

$$\cos\delta_H = 1 \; ; \; \sin\delta_H = \delta_H$$

Die Definition (3) werden ergänzt durch:

$$\underline{h_H} = \begin{bmatrix} 0 \\ 0 \\ 1 \\ 1 \end{bmatrix}$$

Die Gleichung (4) für die Gierbeschleunigung lautet nun:

$$\ddot{\psi} = \frac{1}{\theta} \sum_{i=1}^{4} \left[ \left( a_i + a_{Hi} \right) F_{Si} + \left( b_i + b_{Hi} \right) F_{Bi} \right]$$

Die Definitionen (5) werden ergänzt durch:

$$\underline{a_H} = \begin{bmatrix} 0 \\ 0 \\ -l_L \\ l_R \end{bmatrix} \quad ; \qquad \underline{b_H} = \begin{bmatrix} 0 \\ 0 \\ -l_H \\ -l_H \end{bmatrix}$$

Die Gleichung (8) für die Schräglaufwinkel lautet nach Einführung des Hinterradwinkels:

$$\underline{\alpha} = \underline{1} \cdot \beta + \underline{e} \cdot \dot{\psi} + \underline{d} \cdot \delta + \underline{d_H} \cdot \delta_H$$

mit der zusätzlichen Definition (9):

$$\underline{d_H} = \begin{bmatrix} 0 \\ 0 \\ -1 \\ -1 \end{bmatrix}$$

Die Linearisierung des Systems

$$\underline{\dot{Y}} = \underline{f}(\underline{Y},\underline{\lambda},\delta_H,t)$$

muß zusätzlich für die neue Stellgröße $\delta_H$ durchgeführt werden, wobei als Arbeitspunkt $\delta_{H0} = 0$ gewählt werden kann.

Die Gleichungen (12) für die Pseudo-Eingangsgrößen lauten dann:

$$U_1' = \sum_{i=1}^{4} \frac{\partial f_1}{\partial \lambda_i}\bigg|_0 \cdot \Delta\lambda_i + \frac{\partial f_1}{\partial \delta_H}\bigg|_0 \cdot \delta_H$$

$$U_2' = \sum_{i=1}^{4} \frac{\partial f_2}{\partial \lambda_i}\bigg|_0 \cdot \Delta\lambda_i + \frac{\partial f_2}{\partial \delta_H}\bigg|_0 \cdot \delta_H$$

Für die Bremskraftoptimierung steht damit ein zusätzlicher, dritter Freiheitsgrad zur Verfügung.

Die Linearisierung des Systems (10), (11) kann außer um die Solltrajektorie auch um andere Arbeitspunkte der Zustandsgrößen $\underline{Y_0}$ durchgeführt werden, z.B. um die ungestörte Eigenbewegung des Systems. In diesem Fall muß außer der Zustandsgrößenrückführmatrix $F$ auch noch eine Führungsgrößenrückführmatrix $W$ berechnet werden, da Arbeitspunkt und Sollwert nicht übereinstimmen. Als Arbeitspunkt für die Stellgrößen $\underline{\lambda_0}$ kann z.B. auch der jeweilige Istwert des Schlupfs gewählt werden.

Neben dem Riccati-Entwurf und dem oben beschriebenen Reglerentwurf über Kalman-Filter kann auch ein anderes Reglerentwurfsverfahren verwendet werden, z.B. mit Hilfe einer Polvorgabe.

Für die oben beschriebene Bremskraftoptimierung gibt es auch weniger rechenzeitintensive Alternativen, die zu nur wenig schlechteren Resultaten führen. Beispielsweise kann an den Vorder- bzw. Hinterrädern links und rechts jeweils derselbe Sollschlupfwert vorgegeben werden. Bei annähernd gleichen Schräglaufwinkeln links und rechts ist nach Gleichung (7) auch das Verhältnis von Seiten- zu Bremskraft und damit die Richtung der resultierenden Kraft $F_{Ri}$ links und rechts jeweils fast gleich. Die dabei erzielte Längsverzögerung liegt nur unwesentlich unter der durch die vollständige Optimierung erreichbaren. Die Optimierung entfällt, weil durch die zwei Zwangsbedingungen

$$\lambda_1 - \lambda_{01} = \lambda_2 - \lambda_{02}$$

EP 0 503 030 B1

und

$$\lambda_3 - \lambda_{03} = \lambda_4 - \lambda_{04}$$

keine Freiheitsgrade mehr zur Verfügung stehen.

Die Optimierung kann auch vereinfacht werden, wenn darauf verzichtet wird, an allen Rädern Schlupfänderungen vorzugeben. Gute Regelungsergebnisse können z.B. bereits erzielt werden, wenn bei Kurvenbremsungen jeweils nur am kurienäußeren Vorderrad und am kurveninneren Hinterrad eingegriffen wird. Diese zwei Räder tragen zur Steuerung der Giergeschwindigkeit im allgemeinen wesentlich mehr bei, als die Räder der anderen Fahrzeugdiagonalen.

Für die Optimierung der Fahrzeugbeschleunigung gilt entsprechendes. In vielen Fällen ist es möglich, auf die Eingangsgröße $U'_1$ ganz zu verzichten. Die Eingangsmatrix lautet dann:

$$B = \begin{bmatrix} 0 \\ 1 \end{bmatrix}$$

Dies muß beim Reglerentwurf berücksichtigt werden. Auch mit nur einer Stellgröße ist das System vollständig steuerbar. Zur Bremskraftoptimierung muß nur die zweite Gleichung in (12) berücksichtigt werden.

Wenn die Modellparameter ohnehin nicht genau genug bekannt sind, können die Störgrößen $\underline{Z}$ (13) vernachlässigt werden, ohne daß darunter die Regelgüte leidet.

In Sonderfällen, wie stark unterschiedlichen Haftreibbeiwerten der Fahrbahn unter den Rädern links und rechts können zusätzliche Maßnahmen zur Erzielung eines zufriedenstellenden Fahrverhaltens erforderlich sein. Das oben beschriebene Regelungskonzept, bei dem der Bereich der Reifensättigung nicht verlassen werden darf (s. Fig. 4) kann in solchen Fällen zu einer zu starken Gierbewegung und damit zu Fahrzeuginstabilität führen. Verbesserungen lassen sich durch eine Begrenzung der Druckdifferenzen bzw. der Bremskraftdifferenzen an den Hinterrädern erreichen.

Die zulässigen Differenzen können konstant sein oder nach Bremsbeginn gesteuert ansteigen. Solche Lösungen sind bereits unter dem Namen Giermomentabschwächung bzw. Giermomentaufbauverzögerung bekannt. Da beim hier vorgestellten Regelkonzept die Bremskräfte und die Gierbewegung bekannt sind, können jedoch je nach Fahrzustand gezielter zulässige Bremskraftdifferenzen vorgegeben werden.

Wenn ein unterlagerter Radregler zur Einstellung der vorgegebenen Schlupfwerte benötigt wird, sind Phasenverschiebungen zwischen Soll- und Istwert unvermeidlich. Dies kann beim Entwurf des Fahrzeugreglers durch eine Einbeziehung der typischen Radreglerdynamik in das Modell berücksichtigt werden. Dies führt jedoch zu einer höheren Systemordnung und es kann dadurch zu Rechenzeitproblemen kommen. Alternativ dazu kann die Phasenverschiebung des unterlagerten Reglers näherungsweise durch die Einführung eines D-Anteils in der Rückführung der Zustandsgrößen kompensiert werden. Der Regelsatz lautet dann:

$$\underline{U} = -F(\underline{X} + K_D \bullet \dot{\underline{X}}).$$

Verwendete Bezeichnungen:

| | |
|---|---|
| $a_X, a_Y$ | - Längs-/Querbeschleunigung im Fahrzeugschwerpunkt |
| $C_\lambda, C_\alpha$ | - Längs-/Seitensteifigkeit des Reifens |
| $F_{Bi}, F_{Si}$ | - Reifenkräfte in Reifenlängs-/querrichtung |
| $F_{Xi}, F_{Yi}$ | - Reifenkräfte in Fahrzeuglängs-/querrichtung |
| $F_{Zi}$ | - Aufstandskraft des Reifens |
| $m$ | - Fahrzeugmasse |
| $S_i$ | - Resultierender Reifenschlupf |
| $V_X, V_Y$ | - Fahrzeuglängs-/quergeschwindigkeit im Schwerpunkt |
| $\dot{V}_X, \dot{V}_Y$ | - Zeitliche Änderung der Längs-/quergeschwindigkeit |
| $V_{Xi}, V_{Yi}$ | - Fahrzeuglängs-/quergeschwindigkeit am Rad |
| $V_{Ch}$ | − Charakterische Geschwindigkeit $V_{Ch}$ - Charakterische Geschwindigkeit |

| | |
|---|---|
| $\alpha_i$ | - Schräglaufwinkel des Rades |
| $\beta$ | - Schwimmwinkel des Fahrzeugs im Schwerpunkt |
| $\delta$ | - Lenkwinkel (vorne) |
| $\delta_H$ | - Lenkwinkel an den Hinterrädern |
| $\dot{\psi}$ | - Gierwinkelgeschwindigkeit |
| $\lambda_i$ | - Reifenschlupf |
| $\mu_{Ri}$ | - Resultierender Kraftschlußbeiwert |
| $\theta$ | - Trägheitsmoment um Fahrzeughochachse |
| $l_V, l_H, l_L, l_R$ | - geometrische Abmessungen (Schwerpunktslage) |
| $A, B, ...$ | - Matrizen |
| $\underline{a}, \underline{b}, \underline{X}...$ | - Vektoren |
| $\lambda_i^*$ | - Sollschlupf |
| $V_{Ri}$ | - Radgeschwindigkeit |
| $P$ | - Vordruck |
| $P_i$ | - Radbremsdruck |
| $F_R$ | - Gesamtkraft des Reifens |

## Patentansprüche

1. Verfahren zur Verbesserung der Beherrschbarkeit von Kraftfahrzeugen wobei Sollschlupfwerte $\lambda_i^*$ für die einzelnen Räder unter Zuhilfenahme der Meßgröße Giergeschwindigkeit $\dot{\psi}$ und der ermittelten Längsgeschwindigkeit $V_X$ ermittelt werden und die Radschlüpfe an wenigstens einem Teil der Räder mit einem Antiblockierregelsystem oder Antriebsschlupfregelsystem entsprechend eingeregelt werden, dadurch gekennzeichnet, daß neben der Meßgröße Giergeschwindigkeit $\dot{\psi}$, die Radgeschwindigkeiten $\overline{V_{Ri}}$, der Lenkwinkel $\delta$, der Vordruck $P$ oder die Radbremszylinderdrücke $P_i$ und bei einem Antriebsschlupfregelsystem die Motordrehzahl und der Drosselklappenwinkel gemessen werden, daß hieraus die Fahrzeuglängsgeschwindigkeit $\hat{V}_X$, die Fahrzeuglängsbeschleunigung $\hat{\dot{V}}_X$, die Radschlupfwerte $\lambda_i$ und die Reifenkräfte in Reifenlängsrichtung $\hat{F}_{Bi}$ abgeschätzt werden, daß diese Größen $\hat{V}_X$, $\hat{\dot{V}}_X$ und $\lambda_i$ einem Fahrzeugregler und die Größen $\hat{V}_X$, $\lambda_i$ und $\hat{F}_{Bi}$ einem Beobachter zur Abschätzung der Gesamtkraft $\hat{F}_R$ und der Quergeschwindigkeit $\hat{V}_Y$ zugeführt werden, der diese dann an den Fahrzeugregler weitergibt und daß in dem Fahrzeugregler unter Zuhilfenahme eines einfachen Modells Schlupfsollwerte $\lambda_i^*$ an den Rädern ermittelt und mit einem Antiblockierregelsystem oder Antriebsschlupfregelsystem eingestellt werden.

2. Verfahren nach Anspruch 1, dadurch gekennzeichnet, daß die Schlupfsollwerte einem Antiblockier-/Antriebsschlupfregelsystem zugeführt werden, das seinerseits Schlupfsollwerte erzeugt und daß die Abweichung des einen Schlupfsollwerts vom anderen diesem überlagert wird.

## Claims

1. Method for improving the controllability of motor vehicles, desired slip values $\lambda_i^*$ being determined for the individual wheels with the aid of the measured variable of yaw rate $\dot{\psi}$ and the longitudinal speed $V_X$ determined and the wheel slips being adjusted accordingly at at least some of the wheels by means of an antiblock control system or drive slip control system, characterised in that, in addition to the measurement variable of yaw rate $\dot{\psi}$, the wheel speeds $V_{Ri}$, the steering angle $\delta$, the inlet pressure $P$ or the wheel brake cylinder pressure $P_i$ and, in a drive slip control system, the engine speed and the throttle valve angle are measured, in that the longitudinal vehicle speed $\hat{V}_X$, the longitudinal vehicle acceleration $\hat{\dot{V}}_X$, the wheel slip values $\lambda_i$ and the tyre forces in the tyre longitudinal direction $\hat{F}_{Bi}$ are estimated herefrom, in that these variables $\hat{V}_X$, $\hat{\dot{V}}_X$ and $\lambda_i$ are fed to a vehicle controller and the variables $\hat{V}_X$, $\lambda_i$ and $\hat{F}_{Bi}$ are fed to an observer for estimating the total force $\hat{F}_R$ and the transverse speed $\hat{V}_Y$, which observer then passes the latter on to the vehicle controller, and in that desired slip values $\lambda_i^*$ at the wheels are determined in the vehicle controller with the aid of a simple model, and are adjusted using an antiblock control system or drive slip control system.

2. Method according to Claim 1, characterised in that the desired slip values are fed to an antiblock/drive slip control system, which for its part gererates desired slip values, and in that the deviation of one desired slip value from the other is superimposed thereupon.

**Revendications**

1. Procédé pour améliorer la maîtrise de véhicules dont les coefficients de patinage de consigne ($\lambda_i^*$) pour les différentes roues sont déterminés à l'aide de la grandeur de mesure de points vitesses de giration ($\dot{\psi}$) et de la vitesse longitudinale obtenue ($V_X$) et les patinages de roue sur au moins une partie des roues sont régulés selon un système de protection au blocage ou de protection au patinage à l'entraînement, de manière correspondante, caractérisé en ce qu'à côté de la grandeur de mesure, vitesse de giration ($\dot{\psi}$), on mesure les vitesses de roue ($V_{Ri}$), l'angle de braquage ($\delta$), la pression amont ($P$) ou la pression ($P_i$) dans les cylindres de roues et dans le cas d'un système de régulation anitpatinage, on mesure la vitesse de rotation du moteur et l'angle du papillon d'étranglement, on évalue la vitesse longitudinale du véhicule ($\widehat{V}_X$), l'accélération longitudinale du véhicule ($\widehat{\dot{V}}_X$), le coefficient de patinage de roue ($\lambda_i$) et les forces de pneumatiques dans la direction longitudinale des pneumatiques ($\widehat{F}_{Bi}$), on fournit ces grandeurs ($\widehat{V}_X$, $\widehat{\dot{V}}_X$) et ($\lambda_i$) à un régulateur du véhicule et les grandeurs ($\widehat{V}_X$), ($\lambda_i$) et ($\widehat{F}_{Bi}$) à un observateur pour évaluer la force totale ($\widehat{F}_R$) et la vitesse transversale ($\widehat{V}_Y$), qui les transmet alors au régulateur de véhicule et en ce que dans le régulateur de véhicule, à l'aide d'un modèle simple, on règle les valeurs de consigne de patinage ($\lambda_i^*$) sur les roues et on les règle avec un système de régulation antiblocage de roues ou un système de régulation antipatinage.

2. Procédé selon la revendication 1, caractérisé en ce qu'on fournit les valeurs de consigne de patinage à un système de régulation antiblocage/anitpatinage qui crée à son tour des coefficients de consigne de patinage et superpose la déviation d'une valeur de consigne de patinage de l'autre qui lui est superposé.

Fig.1

Fig.2

18

$F_{Bi}$

$F_{Ri}$

$F_{si}$

Fig.3

Sättigung

$\mu_R$

$S_{min}$

1

S

Fig.4

Fig.5

Fig.6

**Fahrzeug** 10

**Meßtechnik** 11 — Messung von $v_{Rad}$, $\dot{\psi}$, $\delta$, $P_{vor}$

**Schlupfregeler** 12 — Schätzung $\hat{v}_x$, $\hat{\dot{v}}_x$, $F_B$, $\hat{\lambda}$

**Beobachter** 13 — Schätzung $\hat{F}_R$, $\hat{v}_Y$

**Berechnung** 14 — $a$, $b$, $e$, $g$, $h$, $\beta$, $\alpha$, $S_{min}$

**Sollwerte** 15 — $\beta_{soll}$, $\dot{\psi}_{soll}$

**Bremshydraulik** 20 — Druckmodulation $P$

**Schlupfregeler** 12 — Hydraulik–Ansteuerug $\triangle T$

**Optimierung** 19 — $\lambda_{soll}$

**Stellgröße** 18 — $u'$

**Reglerentwurf** 17 — $F$

**Linearisierung** 16 — $A$, $\dfrac{\partial f_1}{\partial \lambda}$, $\dfrac{\partial f_2}{\partial \lambda}$

Fig.7